# EUROPÄISCHE PATENTSCHRIFT

(11) **EP 2 703 707 B1**
(45) Veröffentlichungstag und Bekanntmachung des Hinweises auf die Patenterteilung: **25.10.2017**
(21) Anmeldenummer: 12194193.4
(22) Anmeldetag: 26.11.2012
(51) Int. Cl.: F16L 13/14, F16L 33/207, F16L 19/065, F16L 37/138

(54) **System zum Herstellen einer dichten Rohrverbindung**
System for producing a fluid-tight pipe connection
Système de fabrication d'une liaison étanche

(30) Priorität: 03.09.2012 DE 102012108146
(43) Veröffentlichungstag der Anmeldung: 05.03.2014
(73) Patentinhaber: Viega Technology GmbH & Co. KG, 57439 Attendorn (DE)
(72) Erfinder: Sinoplu, Sudi, 57439 Attendorn (DE); Aragon, Hernandez Oscar, OT Bad Fredeburg 57392 Schmallenberg (DE); Michel, Björn, 45276 Essen (DE); Friedrich, Jan-Alexander, 57489 Drolshagen (DE); Meissner, Kai-Michael, 57223 Kreuztal (DE); König, Manfred, 57439 Attendorn (DE); Avci, Mesut, 57439 Attendorn (DE); Koschig, Bernd, 57439 Attendorn (DE); Oussios, Christos, 50858 Köln (DE); Ragoss, Christian, 51674 Wiehl (DE); Eckel, Mario, 57368 Lennestadt (DE); Just, Michael, 94559 Niederwinkling (DE)
(74) Vertreter: Cohausz & Florack

(56) Entgegenhaltungen:
- DE-A1- 3 808 383
- DE-A1-102007 042 605

## Beschreibung

Die Erfindung betrifft ein System zum Herstellen einer dichten Verbindung mit einem rohrförmigen Ende und mit einem Fitting. Darüber hinaus betrifft die Erfindung eine mit einem erfindungsgemäßen System hergestellte dichte Verbindung.

Systeme der eingangs genannten Art sind aus dem Stand der Technik bekannt, um rohrförmige Enden mithilfe von Fittings zu verbinden. Hierbei können die rohrförmigen Enden sowohl die eines Rohres sein als auch die von anderen Bauteilen wie beispielsweise von Armaturen. Mittels der Fittings können beispielsweise sowohl Rohre miteinander verbunden werden als auch Rohre mit anderen Bauteilen, wie beispielsweise Hähnen, Ventilstücken oder ähnlichem. Weiterhin kann das Fitting zum Beispiel auch bereits als T-Stück ausgestaltet sein.

Auch um dichte Verbindungen im Bereich der Gasleitungen oder Flüssigkeitsleitungen wie beispielsweise Wasser- und insbesondere Trinkwasserleitungen herzustellen, werden eingangs genannte Systeme verwendet. Dabei müssen zur Gewährleistung von einer dauerhaft dichten Verbindung mitunter strenge Anforderungen an die Verbindung erfüllt werden. Ist das von den Rohren geführte Medium ein Gas, sollte die Verbindung einem Druck von bis zu 10 bar bei Temperaturwechseln von -20 bis +60 °C über mehrere Tage standhalten. Ist das geführte Medium Wasser, sollte die Verbindung Temperaturwechseln von Raumtemperatur oder kaltem Wasser bis zu 95 °C standhalten und zudem möglichst korrosionsresistent sein.

Aufgrund der Stabilität, der chemischen Unbedenklichkeit bei Trinkwasseranwendungen und des hochwertigeren Eindrucks, werden Armaturen und Rohrleitungen häufig aus Metall hergestellt oder besitzen zumindest eine Metall-Innenschicht, einen sogenannten Inliner. Somit ist auch das rohrförmige Ende aus einem Metall gefertigt bzw. weist an seiner Innenumfangsfläche zumindest teilweise Metall auf.

Um ein kompaktes System zur Herstellung einer dichten Verbindung bereitzustellen, ist es häufig erwünscht, mittels eines Stützabschnitts zum Einführen in das rohrförmige Ende eine Abdichtung zu realisieren, welche innerhalb des rohrförmigen Endes liegt (innen abdichtend). Dies hat zudem den Vorteil, dass ein Kontakt des geführten Mediums mit der Stirnseite des rohrförmigen Endes vermieden werden kann. Dies ist insbesondere bei Verbundrohren erwünscht, da so ein Eindringen de Mediums zwischen die einzelnen Schichten vermieden werden kann.

Um aus Metall bestehende rohrförmige Enden trotz ihrer fehlenden Elastizität abzudichten ist im Stand der Technik die Verwendung von sogenannten Dichtelementen, beispielsweise O-Ringen, vorgeschlagen. Dazu wird zwischen der Außenumfangsfläche des in das rohrförmige Ende eingeführten Stützabschnitts und der Innenumfangsfläche des rohrförmigen Endes ein Dichtelement positioniert. Die Elastizität des Dichtelements kann die fehlende Elastizität des Metalls ausgleichen.

Die DE 38 08 383 A1 offenbart eine Verbindung zwischen einer rohrförmigen Leitung aus einem Wellschlauch oder Wellrohr aus Metall und einem Anschlussteil. Dabei ist ein Dichtelement vorgesehen.

In der DE 10 2007 042 605 A1 wird eine Anschlussvorrichtung für einen ringgewellten oder schraubengangförmig gewellten Metallschlauch offenbart, wobei das Rohrende auf ein metallisches Anschlussteil gebracht wird und anschließend das Anschlussteil mit einem Aufweitdorn von innen aufgeweitet wird. Dabei ist ebenso ein zusätzliches separates Dichtmittel vorgesehen.

Problematisch ist hierbei allerdings zum einen, dass aufgrund des zusätzlich vorzusehenden Dichtelements eine erhöhte Sorgfalt bei der Installation oder Montage nötig ist, damit das Dichtelement beispielsweise nicht verrutscht. Es kann bei der Verwendung von solchen Dichtelementen leicht zu unbeabsichtigten Undichtigkeiten kommen.

Zum anderen kann es notwendig sein, für die Verwendung der Fittings für Gas führende Bauteile einerseits und für Wasser führende Bauteile andererseits aufgrund der unterschiedlichen Auswirkungen des Mediums auf die elastischen Dichtelemente jeweils unterschiedliche Dichtelemente oder sogar unterschiedliche Fittings vorzusehen. Dies führt zu weiteren Nachteilen wie einer aufwendigeren Produktion und einer geforderten höheren Sorgfalt bei der Montage aufgrund der Notwendigkeit von unterschiedlichen Dichtelementen oder Fittings in Abhängigkeit vom geführten Medium.

Weiterhin ist die Verwendung von Dichtelementen bei einem innen abdichtenden Fitting nachteilig, da hierfür entsprechende wuchtige Stützabschnitte vorgesehen sein müssen, damit diese die Dichtelemente sicher aufnehmen können. Hierdurch entstehen allerdings Querschnittsverengungen im Bereich des in das rohrförmige Ende eingeführten Stützabschnitts. Dies kann schließlich zu Druckverlusten und Ansammlungen von Ablagerungen in diesem Bereich führen.

Um diese Nachteile zu vermeiden ist es bekannt, außen abdichtende Systeme einzusetzen. Dabei wird das Dichtelement zwischen der Innenumfangsfläche des Fittings und der Außenumfangsfläche des rohrförmigen Endes eingesetzt.

Nachteilig sind hierbei allerdings der im Außenbereich erhöhte Platzbedarf einerseits und der bis zu der Außenumfangsfläche des rohrförmigen Endes reichende Kontakt mit dem geführten Medium andererseits.

Hiervon ausgehend liegt der vorliegenden Erfindung die Aufgabe zugrunde, ein System zum Herstellen einer dichten Verbindung mit einem rohrförmigen Ende und mit einem Fitting und eine dichte Verbindung anzugeben, welches die zuvor genannten Nachteile vermeidet.

Die Aufgabe wird gemäß einer ersten Lehre der vorliegenden Erfindung durch ein System zum Herstellen einer dichten Verbindung mit einem rohrförmigen Ende und mit einem Fitting gelöst, wobei das Fitting zumindest einen ersten rohrförmigen Fittingkörper mit einem ersten Stützabschnitt zum Einführen in das rohrförmige Ende aufweist, wobei der erste Stützabschnitt an seiner Außenumfangsfläche zumindest teilweise aus Kunststoff besteht, wobei die Innenumfangsfläche des rohrförmigen Endes zumindest teilweise aus Metall besteht, und wobei die aus Kunststoff bestehende Außenumfangsfläche des ersten Stützabschnitts und die aus Metall bestehende Innenumfangsfläche des rohrförmigen Endes zumindest abschnittsweise in dichte Anlage zueinander zu bringen sind.

Unter einem Stützabschnitt wird dabei der Abschnitt des Fittingkörpers verstanden, welcher in das rohrförmige Ende eingeschoben werden kann und somit das rohrförmige Ende von innen stützen kann. Insofern stellt der Stützabschnitt einen Innenstützabschnitt oder Innenstützkörper dar. Der Fittingkörper kann dabei aber insbesondere noch weitere Abschnitte aufweisen, welche sich an den Stützabschnitt anschließen, beispielsweise Übergangs- oder Grundabschnitte, aber auch weitere Stützabschnitte, welche der Verbindung mit weiteren Bauteile dienen können.

Dadurch, dass der erste Stützabschnitt zum Einführen in das rohrförmige Ende ausgeführt ist, kann ein vorteilhaftes innen abdichtendes System bereitgestellt werden, welches verhindert, dass der Fitting außen zu weit aufbaut und die Abdichtung nicht erst auf der Außenseite des rohrförmigen Endes erfolgt. Dadurch, dass der erste Stützabschnitt an seiner Außenumfangsfläche zumindest teilweise aus Kunststoff besteht, das rohrförmige Ende an seiner Innenumfangsfläche zumindest teilweise aus Metall besteht, wobei die aus Kunststoff bestehende Außenumfangsfläche des ersten Stützabschnitts und die aus Metall bestehende Innenumfangsfläche des rohrförmigen Endes zumindest abschnittsweise in dichte Anlage zueinander zu bringen sind, kann erreicht werden, dass auch rohrförmige Enden, welche auf ihrer Innenumfangsfläche Metall aufweisen abgedichtet werden können, ohne ein Dichtelement vorsehen zu müssen. Dadurch können nachteilige Querschnittsverminderungen im Fittingbereich reduziert werden. Daraus, dass die aus Kunststoff bestehende Außenumfangsfläche des ersten Stützabschnitts und die aus Metall bestehende Innenumfangsfläche des rohrförmigen Endes zumindest abschnittsweise in dichte Anlage zueinander zu bringen sind, folgt, dass der Stützabschnitt und das rohrförmige Ende abschnittsweise für eine dichte Anlage geeignet sind. Die dichte Anlage kann beispielsweise durch Verpressen, insbesondere durch radial einwärtiges Verpressen, hergestellt werden.

Überraschenderweise wurde festgestellt, dass durch direkte Anlage der aus Kunststoff bestehenden Außenumfangsfläche des ersten Stützabschnitts mit der zumindest teilweise aus Metall bestehenden Innenumfangsflächen des rohrförmigen Endes eine ausreichende Dichtigkeit erzielt werden kann. Bisher war man davon ausgegangen, dass eine solche Innenabdichtung eines Metall auf seiner Innenumfangsfläche aufweisenden rohrförmigen Endes ohne ein Dichtelement nicht möglich sei.

Dass die aus Kunststoff bestehende Außenumfangsfläche des ersten Stützabschnitts und die aus Metall bestehende Innenumfangsfläche des rohrförmigen Endes zumindest abschnittsweise in dichte Anlage zueinander zu bringen sind, bedeutet, dass beispielsweise durch eine im Wesentlichen radiale Krafteinwirkung, beispielsweise durch ein Verpressen, die Flächen in dichte Anlage gebracht werden können. In der Regel ist ein Einschieben des ersten Stützabschnitts in das rohrförmige Ende bzw. ein Aufschieben des rohrförmigen Endes auf den ersten Stützabschnitt noch nicht ausreichend um eine dichte Verbindung herzustellen. Vielmehr bedarf es dafür regelmäßig einer entsprechenden Verpressung. Dazu ist beispielsweise eine entsprechende Verformbarkeit des Rohres vorteilhaft.

Im Ergebnis kann durch die Innenabdichtung ein kompaktes System bereitgestellt werden, welches aufgrund der direkten Abdichtung zwischen erstem Stützabschnitt und rohrförmigen Ende besonders einfach und sicher zu handhaben ist und welches gleichzeitig die Verwendung von Rohren mit zumindest teilweise aus Metall bestehenden Innenumfangsflächen, wie Metallrohren, ermöglicht.

Vorzugsweise besteht die gesamte Innenumfangsfläche des rohrförmigen Endes aus Metall und/oder die gesamte Außenumfangsfläche des ersten Stützabschnitts aus Kunststoff.

Weiterhin bevorzugt ist, dass der erste Stützabschnitt, insbesondere der erste Fittingkörper, im Wesentlichen vollständig aus Kunststoff besteht. Dadurch kann eine besonders wirtschaftliche Herstellung des Fittings erzielt werden. Insbesondere wurde festgestellt, dass ein im Wesentlichen vollständig aus Kunststoff gebildeter erster Stützabschnitt eine ausreichende Abdichtung gegenüber dem rohrförmigen Ende ermöglicht.

Als besonders vorteilhaft zur Abdichtung gegenüber metallischem Material haben sich als Kunststoffe des ersten Stützabschnitts Polyphenylsulfon (PPSU), Polyvenylidenfluorid (PVDF), unvernetztem Polyethylen (PE-RT), vernetztem Polyethylen (PE-Xa, PE-Xb, PE-Xc), Polybuten und/oder Polypropylen erwiesen. Diese Kunststoffe sind für die Verwendung im Bereich von Gasleitungen und/oder Trinkwasserleitungen zugelassen und können die benötigte Abdichtung erzielen.

Vorzugsweise ist der Bereich zwischen der Außenumfangsfläche des ersten Stützabschnitts und der Innenumfangsfläche des rohrförmigen Endes dichtringfrei, insbesondere dichtelementfrei, ausgebildet. Es wurde erkannt, dass auch ohne zusätzliche Dichtringe bzw. Dichtelemente eine dauerhaft dichte Verbindung realisiert werden kann. Dadurch müssen insbesondere keine unterschiedlichen Dichtelemente oder Fittings in Abhängigkeit des geführten Mediums vorgesehen werden. Zudem kann eine Querschnittsreduktion im Bereich des Fittings minimiert werden. Vorzugsweise ist das gesamte Fitting dichtringfrei, insbesondere dichtelementfrei, ausgebildet.

Vorzugsweise ist das rohrförmige Ende das Ende eines Metallrohres oder eines Verbundrohrs, insbesondere eines Mehrschichtverbundrohrs, mit einer zumindest teilweise aus Metall bestehenden Innenumfangsfläche. Es hat sich herausgestellt, dass auch vollständig aus Metall hergestellte Rohre, beispielsweise durch eine radial einwärtige Verpressung, gegen die Kunststoff aufweisende Innenumfangsfläche des ersten Stützabschnitts abgedichtet werden können. Ist das rohrförmige Ende das Ende eines Verbundrohrs, kann das geleitete Medium davon abgehalten werden, die Stirnseite des rohrförmigen Endes zu benetzen und zwischen die einzelnen Schichten zu gelangen.

Vorzugsweise besteht das rohrförmige Ende zumindest teilweise aus Kupfer, Messing, Aluminium und/oder Stahl, insbesondere ferritischem oder austenitischem Edelstahl, oder einer Legierung oder Kombination davon. Bei einem Verbundrohr können einzelne Schichten, beispielsweise Zwischenschichten, insbesondere aber die innerste Schicht, aus diesen Materialien bestehen.

Gemäß einer weiteren Ausgestaltung des erfindungsgemäßen Systems ist auf der Außenumfangsfläche des ersten Stützabschnitts mindestens eine radial auswärtige Erhöhung, insbesondere in Form einer Profilierung, vorgesehen.

Es hat sich herausgestellt, dass durch die mindestens eine radial auswärtige Erhöhung, beispielsweise in Form einer radial auswärts gerichteten lokalen Verdickung des ersten Stützabschnitts, bereichsweise eine besonders effektive Abdichtung zwischen der Innenumfangsfläche des rohrförmigen Endes und der Außenumfangsfläche des ersten Stützabschnitts erreicht werden kann. Die mindestens eine radial auswärtige Erhöhung kann insbesondere auf der Außenumfangsfläche des ersten Stützabschnitts umlaufend gestaltet sein und/oder in Form einer Zahnung, welche vorzugsweise widerhakenförmig gestaltet ist. Dadurch kann zusätzlich die Gefahr eines unbeabsichtigten Abrutschens oder Herunterrutschens des rohrförmigen Endes vom ersten Stützabschnitt verringert werden.

Eine vorteilhafte Ausgestaltung des erfindungsgemäßen Systems ist dadurch gekennzeichnet, dass das Fitting einen zweiten zumindest teilweise aus Metall bestehenden rohrförmigen Fittingkörper aufweist, wobei der zweite Fittingkörper zumindest teilweise innerhalb des ersten Fittingkörpers angeordnet ist, wobei die Innenumfangsfläche des ersten Fittingkörpers und die Außenumfangsfläche des zweiten Fittingkörpers zumindest bereichsweise gegeneinander abgedichtet sind.

Dadurch, dass die Innenumfangsfläche des ersten Fittingkörpers mit der Außenumfangsfläche des zweiten Fittingkörpers zumindest bereichsweise gegeneinander abgedichtet ist, wird verhindert, dass zwischen der Innenumfangsfläche des ersten Fittingkörpers und der Außenumfangsfläche des zweiten Fittingkörpers das geführte Medium, beispielsweise Gas oder Wasser, austreten kann.

Es wird erreicht, dass ein zumindest teilweise aus Kunststoff bestehender Fittingkörper mit einem zumindest teilweise aus Metall bestehenden Fittingkörper kombiniert werden kann. Dadurch wird die Stabilität des Fittings insgesamt erhöht. Zudem ergibt sich so ein hochwertiger Eindruck des Fittings, welcher besser vom Markt akzeptiert wird. Schließlich kann auf diese Weise ein Fitting bereitgestellt werden, welches sich im Bereich des zweiten Fittingkörpers wie ein aus Metall gefertigtes Fitting verhält und so beispielsweise weiterverbinden lässt.

Alternativ ist allerdings auch denkbar, dass der zweite Fittingkörper zumindest teilweise außerhalb des ersten Fittingkörpers angeordnet ist, wobei die Außenumfangsfläche des ersten Fittingkörpers und die Innenumfangsfläche des zweiten Fittingkörpers zumindest bereichsweise gegeneinander abgedichtet sind. In diesem Fall gelten die folgenden Ausführungen entsprechend abgewandelt.

Vorzugsweise weist der zweite Fittingkörper einen zumindest teilweise aus Metall bestehenden zweiten Stützabschnitt zum Einführen in das rohrförmige Ende auf, wobei der zweite Stützabschnitt zumindest teilweise innerhalb des ersten Stützabschnitts angeordnet ist, wobei die Innenumfangsfläche des ersten Stützabschnitts und die Außenumfangsfläche des zweiten Stützabschnitts bereichsweise gegeneinander abgedichtet sind und wobei zwischen der Innenumfangsfläche des ersten Stützabschnitts und der Außenumfangsfläche des zweiten Stützabschnitts mindestens ein Hohlraum gebildet ist.

Es wird erreicht, dass sich ein zumindest teilweise aus Kunststoff bestehender Stützabschnitt mit einem zumindest teilweise aus Metall bestehenden Stützabschnitt zumindest abschnittsweise in radialer Richtung gesehen überlappt, da der zweite Stützabschnitt zumindest teilweise innerhalb des ersten Stützabschnitts angeordnet ist. Diese Stützabschnitte sind dann in das rohrförmige Ende einschiebbar. Vorzugsweise ist der zweite Stützabschnitt dabei im Wesentlichen koaxial innerhalb des ersten Stützabschnitts angeordnet.

Dadurch, dass zwischen der Innenumfangsfläche des ersten Stützabschnitts und der Außenumfangsfläche des zweiten Stützabschnitts mindestens ein Hohlraum gebildet ist, wird erreicht, dass der mindestens eine Hohlraum für den äußeren Stützabschnitt radial einwärts Raum zum Ausweichen bereitstellt. Somit wird durch den mindestens einen Hohlraum die Elastizität des äußeren zumindest teilweise aus Kunststoff bestehenden Stützabschnitts derart modifiziert, dass dieser eventuelle Verformungen des rohrförmigen Endes ausgleichen kann und so die Dichtigkeit zwischen der Innenumfangsfläche des rohrförmigen Endes und der Außenumfangsfläche des ersten Stützabschnitts verbessert werden kann. Die Elastizität des ersten Stützabschnitts kann dabei insbesondere durch Biegekräfte einerseits und durch die Ringspannung des Kunststoffs des äußeren Stützabschnitts andererseits erzielt werden.

Mit anderen Worten wird dem ersten Stützabschnitt so die Möglichkeit gegeben, radial nach innen nachzugeben und eine zur Abdichtung ausreichende Rückstellkraft radial nach außen bereitzustellen. Auf diese Weise kann ein Fitting mit einem zumindest teilweise aus einem Metall bestehenden Fittingkörper verwendet werden, wobei das Abdichtverhalten eines Vollkunststofffittings nachgebildet werden kann.

Ist mindestens eine radial auswärtige Erhöhung auf der Außenumfangsfläche des ersten Stützabschnitts des ersten Fittingkörpers vorgesehen, ist diese vorzugsweise zumindest teilweise im Bereich des mindestens einen Hohlraums angeordnet. Dadurch kann eine besonders effektive Abdichtung erzielt werden.

Vorzugsweise ist die mindestens eine radial auswärtige Erhöhung nur in den Bereichen auf der Außenumfangsfläche des ersten Stützabschnitts vorzusehen, in denen die Innenumfangsfläche des ersten Stützabschnitts und die Außenumfangsfläche des zweiten Stützabschnitts nicht bereichsweise gegeneinander abgedichtet sind. Die mindestens eine radial auswärtige Erhöhung auf der Außenumfangsfläche des ersten Stützabschnitts ist also insbesondere in den Bereichen der Hohlräume vorzusehen. Dadurch werden dem Fitting besonders vorteilhafte Elastizitätseigenschaften zur Abdichtung gegenüber der Innenumfangsfläche des rohrförmigen Endes verliehen. Dies rührt daher, dass so besonders effektiv die Biegekräfte und die Ringspannungen des Kunststoffs des äußeren Stützabschnitts zur Abdichtung gegen die Innenumfangsfläche des Rohrförmigen Endes mittels der mindestens einen vorgesehenen radial auswärtigen Erhöhung genutzt werden.

Grundsätzlich ist es möglich, dass der Hohlraum mit unterschiedlichen Füllstoffen oder Medien, wie beispielsweise Gasen oder Fasern gefüllt sein kann. Als besonders vorteilhaft hat sich jedoch herausgestellt, wenn mindestens ein Hohlraum zwischen der Innenumfangsfläche des ersten Stützabschnitts und der Außenumfangsfläche des zweiten Stützabschnitts ein mit Luft gefüllter, vorzugsweise ringförmig umlaufender, Hohlraum ist. Mit anderen Worten wird so eine Luftkammer erzeugt, in die der erste Stützabschnitt reinfedern kann. Es hat sich herausgestellt, dass ein mit Luft gefüllter Hohlraum dem ersten Stützabschnitt des ersten Fittingkörpers des Fittings vorteilhafte Eigenschaften in Bezug auf die Elastizität und die Rückstellkräfte verleiht, sodass eine effektive Abdichtung eines rohrförmigen Endes erreicht wird.

Ist gemäß einer weiteren Ausgestaltung mindestens ein Hohlraum zwischen der Innenumfangsfläche des ersten Stützabschnitts und der Außenumfangsfläche des zweiten Stützabschnitts durch mindestens eine Aussparung auf der Außenumfangsfläche des zweiten Stützabschnitts und/oder der Innenumfangsfläche des ersten Stützabschnitts gebildet, kann die Bildung des mindestens einen Hohlraums besonders einfach realisiert werden. Die Aussparungen können beispielsweise durch Querschnittsverringerungen des zweiten Stützabschnitts des zweiten Fittingkörpers bereitgestellt werden.

Grundsätzlich kann die bereichsweise Abdichtung der Innenumfangsfläche des ersten Stützabschnitts gegenüber der Außenumfangsfläche des zweiten Stützabschnitts unterschiedlich, beispielsweise mittels Verkleben, Verschrauben oder Verrasten, erfolgen. Besonders vorteilhaft sind die Innenumfangsfläche des ersten Stützabschnitts und die Außenumfangsfläche des zweiten Stützabschnitts gemäß einer weiteren Ausgestaltung des erfindungsgemäßen Fittings allerdings mittels einer kraftschlüssigen Verbindung, insbesondere einer Presspassung, bereichsweise gegeneinander abgedichtet. Durch die kraftschlüssige Verbindung kann auf einfache Weise eine zuverlässig dichte Verbindung zwischen der Innenumfangsfläche des ersten Stützabschnitts und der Außenumfangsfläche des zweiten Stützabschnitts bereitgestellt werden. Ist bereichsweise eine Presspassung vorgesehen, besitzt in diesen Bereichen die Außenumfangsfläche des zweiten Stützabschnitts ein Übermaß im Vergleich zur Innenumfangsfläche des ersten Stützabschnitts. Eine solche Presspassung kann dadurch realisiert werden, dass der erste Fittingkörper zumindest im Bereich des ersten Stützabschnitts aufgeweitet wird und auf den zweiten Fittingkörper aufgeschoben wird. Durch die durch den Memoryeffekt verursachte radiale Kontraktion des ersten Fittingkörpers im aufgeweiteten Bereich wird dann eine effektive Press- oder Übermaßpassung realisiert.

Gemäß einer nächsten Ausgestaltung des erfindungsgemäßen Systems, ragt das dem rohrförmigen Ende zugewandte Ende des ersten Stützabschnitts über das dem rohrförmigen Ende zugewandte Ende des zweiten Stützabschnitts in axialer Richtung hinaus. Dabei werden unter den dem rohrförmigen Ende zugewandeten Enden der Stützabschnitte die Enden der Stützabschnitte verstanden, welche in das rohrförmige Ende eingeführt werden. Dadurch kann insbesondere ein nach innen frei federnder Bereich an dem dem rohrförmigen Ende zugewandten Ende des ersten Stützabschnitts vorgesehen werden. In diesem Bereich kann insbesondere eine erhöhte Wandstärke des ersten Stützabschnitts vorgesehen sein, sodass in diesem Bereich der erste Stützabschnitt einem Stützabschnitt eines Vollkunststofffittings entspricht. Es hat sich herausgestellt, dass auf diese Weise eine zumindest teilweise aus Metall bestehende Innenumfangsfläche eines rohrförmigen Endes abgedichtet werden kann. Ebenfalls kann dadurch ein in axialer Richtung gesehen kürzerer zweiter Stützabschnitt bzw. Fittingkörper vorgesehen werden bzw. dieser braucht nicht so weit in den ersten Stützabschnitt eingeführt zu werden.

Ragt das dem rohrförmigen Ende abgewandte Ende des zweiten Fittingkörpers über das dem rohrförmigen Ende abgewandte Ende des ersten Fittingkörpers in axialer Richtung hinaus, können an den zweiten Fittingkörper auf beliebige Art und Weise weitere Bauteile, wie Fittings, Rohre oder Armaturen, angeschlossen werden. Da der zweite Fittingkörper vorzugsweise vollständig aus Metall hergestellt sein kann, können hier mittels aus dem Stand der Technik bekannter Methoden weitere Bauteile angeschlossen werden, beispielsweise durch Verpressen. Ebenfalls ist denkbar, das dem rohrförmigen Ende abgewandte Ende des zweiten Fittingkörpers symmetrisch zu dem dem rohrförmigen Ende zugewandten Ende des zweiten Fittingkörpers auszugestalten, also einen weiteren zweiten Stützabschnitt vorzusehen und für weitere Verbindungen zu verwenden.

Vorzugsweise besteht der zweite Fittingkörper, insbesondere der zweite Stützabschnitt, zumindest teilweise aus Kupfer, Messing, Aluminium und/oder Stahl, insbesondere ferritischem oder austenitischem Edelstahl, oder einer Legierung oder Kombination davon. Besonders bevorzugt ist allerdings, wenn der zweite Fittingkörper aus Kupfer oder einer Kupferlegierung hergestellt ist. Dadurch können ein vorteilhaftes Migrationsverhalten, eine gute Korrosionsbeständigkeit, eine gute Festigkeit und eine gute Bearbeitbarkeit, insbesondere Zerspanbarkeit, sowie vorteilhafte Gusseigenschaften kombiniert werden.

Gemäß einer vorteilhaften Ausgestaltung weist das System eine Außenhülse auf, wobei zwischen der Innenumfangsfläche der Außenhülse und der Außenumfangsfläche des ersten Stützabschnitts eine ringförmig umlaufende Aufnahme für das zu verbindende rohrförmige Ende gebildet wird.

Durch das Vorsehen einer Außenhülse in dem System kann eine radial einwärtige Kraft auf das rohrförmige Ende im Bereich des ersten bzw. zweiten Stützabschnitts ausgeübt werden. Dadurch kann mit dem System auf einfache Weise eine besonders dauerhaft dichte Verbindung erreicht werden.

Die Außenhülse kann beispielsweise im Wesentlichen zylindrisch sein und im Wesentlichen koaxial mit dem ersten bzw. zweiten Fittingkörper angeordnet sein.

Auch kann die Außenhülse beispielsweise mehrteilig, insbesondere zweiteilig ausgebildet sein. Beispielsweise kann die Außenhülse eine Presshülse und ein Kraftübertragungselement, beispielsweise eine Überwurfmutter und einen Klemmkörper, umfassen.

Die Außenhülse kann dabei auf ihrer Innenumfangsfläche auch einen oder mehrere radial einwärtige Vorsprünge aufweisen, um eine Fixierung gegenüber dem einzuschiebenden rohrförmigen Ende zu erzielen. Auch kann die Hülse eine oder mehrere Aussparungen aufweisen, um die richtige Positionierung insbesondere des eingeschobenen rohrförmigen Endes überprüfen zu können.

Weiterhin kann der erste oder der zweite Fittingkörper einen Anschlag, beispielsweise in Form eines Flansches, zur axialen Positionierung der Außenhülse aufweisen. Ein solcher Anschlag kann auch als separates Teil ausgebildet sein, welcher mit dem ersten oder dem zweiten Fittingkörper verbunden, beispielsweise verrastet, ist.

Gemäß einer Ausgestaltung des Systems ist die Außenhülse direkt oder indirekt mit dem ersten und/oder mit dem zweiten Fittingkörper, insbesondere mit einem sich an den ersten Stützabschnitt anschließenden Grundabschnitt des ersten Fittingkörpers, verbunden.

Die Außenhülse kann direkt mit dem ersten oder mit dem zweiten Fittingkörper verbunden werden, indem die Außenhülse mit der Außenumfangsfläche des ersten oder des zweiten Fittingkörpers kraftschlüssig, formschlüssig oder materialschlüssig verbunden ist, beispielsweise verrastet, verklebt oder verschraubt ist. Entsprechende Verbindungsmittel können insbesondere auf der Außenumfangsfläche des Grundabschnitts oder Flanschabschnitts des ersten Fittingkörpers vorgesehen sein.

Gemäß einer weiteren Lehre wird die Aufgabe auch durch eine dichte Verbindung, hergestellt mit einem erfindungsgemäßen System gelöst, wobei das rohrförmige Ende auf dem ersten Stützabschnitt des ersten Fittingkörpers positioniert ist.

Dadurch kann die Innenumfangsfläche des rohrförmigen Endes zumindest bereichsweise durch die Außenumfangsfläche des ersten Stützabschnitts des erfindungsgemäßen Systems abgedichtet werden, insbesondere durch mindestens eine radial auswärtige Erhöhung auf der Außenumfangsfläche des ersten Stützabschnitts. Zur Herstellung der dichten Verbindung ist in der Regel eine radial einwärtige Verpressung notwendig.

Es hat sich gezeigt, dass auf dies Weise dichte Verbindungen beispielsweise mit rohrförmigen Enden eines Metallrohres oder eines Verbundrohrs, insbesondere eines Mehrschichtverbundrohrs, mit einer zumindest teilweise aus Metall bestehenden Innenumfangsfläche möglich sind. Es hat sich herausgestellt, dass auch vollständig aus Metall hergestellte Rohre, beispielsweise durch eine radial einwärtige Verpressung, gegen die Kunststoff aufweisende Innenumfangsfläche des ersten Stützabschnitts abgedichtet werden können. Ist das rohrförmige Ende das Ende eines Verbundrohrs, kann das geleitete Medium davon abgehalten werden, die Stirnseite des rohrförmigen Endes zu benetzen und zwischen die einzelnen Schichten zu gelangen.

Vorzugsweise besteht das rohrförmige Ende zumindest teilweise aus Kupfer, Messing, Aluminium und/oder Stahl, insbesondere ferritischem oder austenitischem Edelstahl, oder einer Legierung oder Kombination davon. Bei einem Verbundrohr können einzelne Schichten, beispielsweise Zwischenschichten, insbesondere aber die innerste Schicht, aus diesen Materialien bestehen.

Es gibt nun eine Vielzahl von Möglichkeiten die Erfindung auszugestalten und weiterzubilden. Hierzu wird einerseits auf die dem unabhängigen Patentanspruch 1 nachgeordneten Patentansprüche verwiesen. Zusätzlich soll die Erfindung anhand der folgenden Ausführungsbeispiele näher erläutert werden, wobei auf die beigefügte Zeichnung Bezug genommen wird.

In der Zeichnung zeigen
- Fig. 1: ein erstes Ausführungsbeispiel eines erfindungsgemäßen Systems mit einer Außenhülse im Längsschnitt;
- Fig. 2: ein zweites Ausführungsbeispiel eines erfindungsgemäßen Systems mit einer Außenhülse im Längsschnitt;
- Fig. 3: das System aus Fig. 2 mit auf den ersten Stützkörper aufgeschobenem rohrförmigen Ende;
- Fig. 4: ein drittes Ausführungsbeispiel eines erfindungsgemäßen Systems mit einer Außenhülse im Längsschnitt;
- Fig. 5: ein viertes Ausführungsbeispiel eines erfindungsgemäßen Systems mit einer eine Überwurfmutter und ein Klemmelement aufweisenden Außenhülse im Längsschnitt;
- Fig. 6: ein fünftes Ausführungsbeispiel eines erfindungsgemäßen Systems mit einer ein Kraftübertragungselement und eine Presshülse aufweisenden Außenhülse im Längsschnitt und
- Fig. 7a,b: zwei Längsschnittansichten eines Verbundrohres.

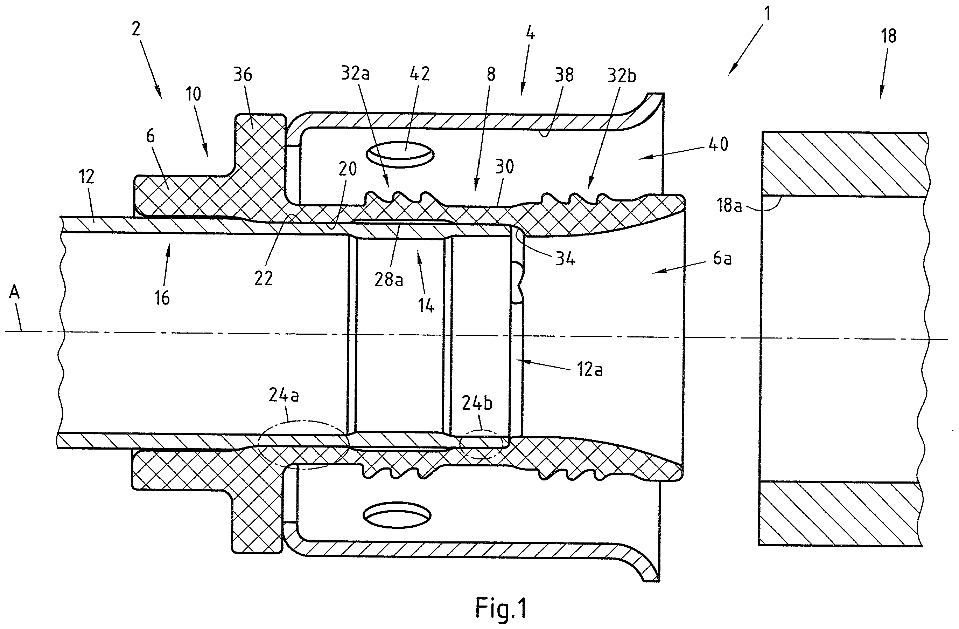

Fig. 1 zeigt ein erstes Ausführungsbeispiel eines erfindungsgemäßen Systems 1 mit einem Fitting 2, einer Außenhülse 4 und einem rohrförmigen Ende 18 im Längsschnitt. Das Fitting 2 umfasst einen ersten (bzw. äußeren) rohrförmigen Fittingkörper 6, welcher einen ersten (bzw. äußeren) Stützabschnitt 8 und einen Grundabschnitt 10 aufweist. Das Fitting 2 umfasst weiterhin einen zweiten (bzw. inneren) rohrförmigen Fittingkörper 12, welcher einen zweiten (bzw. inneren) Stützabschnitt 14 und einen Grundabschnitt 16 aufweist. Der erste Fittingkörper 6 besteht in diesem Fall vollständig aus Kunststoff, beispielsweise PPSU. Es können aber auch andere Kunststoffe zum Einsatz kommen. Der zweite Fittingkörper 12 besteht in diesem Fall vollständig aus Kupfer, wobei aber auch andere Metalle zum Einsatz kommen können.

Die Fittingkörper 6, 12 sind mit ihren dem rohrförmigen Ende 18 zugewandten Enden 6a, 12a in das rohrförmige Ende 18 einführbar. Dabei sind im Gegensatz zu den Grundabschnitten 10, 16 nur die Stützabschnitte 8, 14 in das rohrförmiges Ende 18 einführbar. Das rohrförmige Ende 18 ist in diesem Beispiel das rohrförmige Ende 18 eines im Wesentlichen vollständig aus Metall bestehenden Metallrohres, sodass das rohrförmige Ende 18 an seiner Innenumfangsfläche 18a in diesem Fall vollständig aus Metall besteht. Dies kann beispielsweise ein Rohr aus Kupfer bzw. einer Kupferlegierung sein.

Der zweite Fittingkörper 12 ist im Wesentlichen koaxial innerhalb des ersten Fittingkörpers 6 angeordnet, so dass auch der zweite Stützabschnitt 14 im Wesentlichen koaxial innerhalb des ersten Stützabschnitts 6 entlang der gemeinsamen Längsachse A angeordnet ist. Der zweite Fittingkörper 12 ist dabei teilweise mit Übermaß in den ersten Fittingkörper 6 eingeführt. Dadurch ergibt sich insbesondere in den Bereichen 24a und 24b abschnittsweise eine kraftschlüssige Verbindung in Form einer Presspassung zwischen der Innenumfangsfläche 20 des ersten Stützabschnitts 6 und der Außenumfangsfläche 22 des zweiten Stützabschnitts 12. Dadurch sind die Innenumfangfläche 20 des ersten Stützabschnitts 6 und die Außenumfangsfläche 22 des zweiten Stützabschnitts 12 bereichsweise, vorliegend in den Bereichen 24a und 24b gegeneinander abgedichtet.

Zwischen den so abgedichteten Bereichen 24a, 24b zwischen erstem und zweitem Fittingkörper 6, 12 ist ein Hohlraum 28a zwischen der Innenumfangsfläche 20 des ersten Stützabschnitts 6 und der Außenumfangsfläche 22 des zweiten Stützabschnitts 12 gebildet. Der hier ringförmig umlaufende Hohlraum 28a wird durch eine ebenfalls ringförmig umlaufende Aussparung in der Innenumfangsfläche 20 des ersten Stützabschnitts 8 erzeugt. Der Hohlraum 28a ist mit Luft gefüllt und besitzt in längsaxialer Richtung eine längliche Ausdehnung. Aufgrund der abgedichteten Bereiche 24a, 24b ist der dazwischen liegende Hohlraum 28a gegenüber der Umgebung und gegenüber dem Leitungsinneren abgedichtet.

Im Bereich des Hohlraums 28a ist auf der Außenumfangsfläche 30 des ersten Stützabschnitts 8 eine radial auswärtige Erhöhung in Form einer Zahnung 32a vorgesehen. Die Zahnung 32a ist widerhakenförmig ausgestaltet, sodass ein Herabgleiten des rohrförmigen Endes 18 vermieden wird. Die Zahnung bewirkt eine effektive Abdichtung mit der Innenumfangsfläche des eingeführten rohrförmigen Endes 18. Dadurch, dass die radial auswärtige Erhöhung 32a im Bereich des Hohlraums 28a vorgesehen ist, kann der äußere Stützabschnitt 8 in diesem Bereich in den Hohlraum 28a ausweichen. Durch die Ringkräfte und die Biegekräfte kann die Zahnung 32a, nachdem das rohrförmige Ende 18 auf den ersten Stützabschnitt 8 aufgeschoben und über die Zahnung 32a herübergeschoben wurde, dicht gegen das rohrförmige Ende 18 abdichten. Durch den Hohlraum 28a ist der erste Stützabschnitt 8 besonders anpassungsfähig.

Die Außenumfangsfläche 30 des ersten Stützabschnitts 8 weist im Bereich des dem rohrförmigen Ende 18 zugewandten Endes 6a des Fittingkörpers 6 eine weitere radial auswärtige Erhöhung in Form einer Zahnung 32b auf. Die Zahnung 32b ist im Wesentlichen wie die Zahnung 32a ausgebildet, wobei aber auch unterschiedliche Ausgestaltungen gewählt werden können. Da das dem rohrförmigen Ende 18 zugewandte Ende 6a des ersten Stützabschnitts 8 über das dem rohrförmigen Ende 18 zugewandte Ende 12a des zweiten Stützabschnitts 14 in axialer Richtung hinausragt, überlappen der erste Stützabschnitt 8 und der zweite Stützabschnitt 14 in radialer Richtung hier nicht, sodass im Bereich der weiteren Zahnung 32b ein nach innen frei federnder Bereich an dem dem rohrförmigen Ende 18 zugewandten Ende 6a des ersten Stützabschnitts 8 gebildet ist. Es hat sich gezeigt, dass in diesem Bereich der erste Stützabschnitt 8 das rohrförmige Ende 18 ausreichend abdichten kann. Die Wanddicke des ersten Stützabschnitts 8 ist in diesem Bereich zumindest teilweise gegenüber der des übrigen ersten Stützabschnitts 8 erhöht. Dadurch wird für den zweiten Fittingkörper 12 zudem ein Anschlag 34 in axialer Richtung auf der Innenumfangsfläche des ersten Stützabschnitts gebildet.

Der erste Fittingkörper 6 weist an seinem Grundabschnitt 10 einen sich radial auswärtig erstreckenden Flanschabschnitt 36 auf. Dieser dient als Anschlag in axialer Richtung für die Außenhülse 4. Zudem kann der Flanschabschnitt 36 die Handhabbarkeit bei der Montage, insbesondere beim Aufschieben des rohrförmigen Endes 18 erleichtern.

Die Außenhülse 4 ist im Wesentlichen zylindrisch gestaltet und im Wesentlichen koaxial mit den Fittingkörpern 6, 12 bzw. der Achse A angeordnet. Die Außenhülse besteht in diesem Ausführungsbeispiel aus Metall, allerdings können alternativ auch andere Materialien wie Kunststoff verwendet werden. Zwischen der Innenumfangsfläche 38 der Außenhülse 4 und der Außenumfangsfläche 30 des ersten Stützabschnitts 6 ist eine ringförmig umlaufende Aufnahme 40 gebildet. In die Aufnahme 40 wird das rohrförmige Ende 18 zum Herstellen einer dichten Verbindung eingeführt. Um das Einführen des rohrförmigen Endes 18 zu erleichtern, ist die Außenhülse 4 an ihrem dem rohrförmigen Ende 18 zugewandten Ende radial auswärts gebogen. Hingegen ist die Außenhülse an ihrem dem rohrförmigen Ende 18 abgewandten Ende radial einwärts gebogen, um eine Kontaktfläche mit dem Flanschabschnitt 36 bereitzustellen. Die Außenhülse 4 weist weiterhin Aussparungen 42 auf, um die Positionierung des rohrförmigen Endes 18 zu kontrollieren. Durch das Vorsehen der Außenhülse 4 kann eine radial einwärtige Kraft in eingeschobenem Zustand auf das rohrförmige Ende 18 im Bereich des inneren bzw. äußeren Stützabschnitts 8, 14 ausgeübt werden. Dies geschieht vorzugsweise durch eine Verpressung.

Das dem rohrförmigen Ende 18 abgewandte Ende des zweiten Fittingkörpers 12 ragt über das dem rohrförmigen Ende abgewandten Ende des ersten Fittingkörpers 6 in axialer Richtung hinaus. Der sich an den zweiten Stützabschnitt 14 anschließende Grundabschnitt 16 des zweiten Fittingkörpers 12 kann sich dabei im Wesentlichen zylindrisch fortsetzen. Es können allerdings beliebige Ausgestaltungen an dem dem rohrförmigen Ende 18 abgewandten Ende des zweiten Fittingkörpers 12 vorgesehen sein. Insbesondere kann der zweite Fittingkörper 12 derart gestaltet sein, dass sich hieran weitere Bauteile wie Fittingkörper oder Fittings anschließen können.

Wie aus Fig. 1 ersichtlich ist, wird zur dichten Verbindung des rohrförmigen Endes 18 des Metallrohres kein Dichtring oder Dichtelement benötigt. Trotzdem kann das rohrförmige Ende 18 auf das einen zweiten Fittingkörper 12 aus Metall aufweisende Fitting 2 aufgeschoben werden und so eine dichte Verbindung in den Abschnitten 32a und 32b hergestellt werden. Daher kann das Fitting insbesondere sowohl für Gas- als auch für Wasser- bzw. Trinkwasserleitungen verwendet werden.

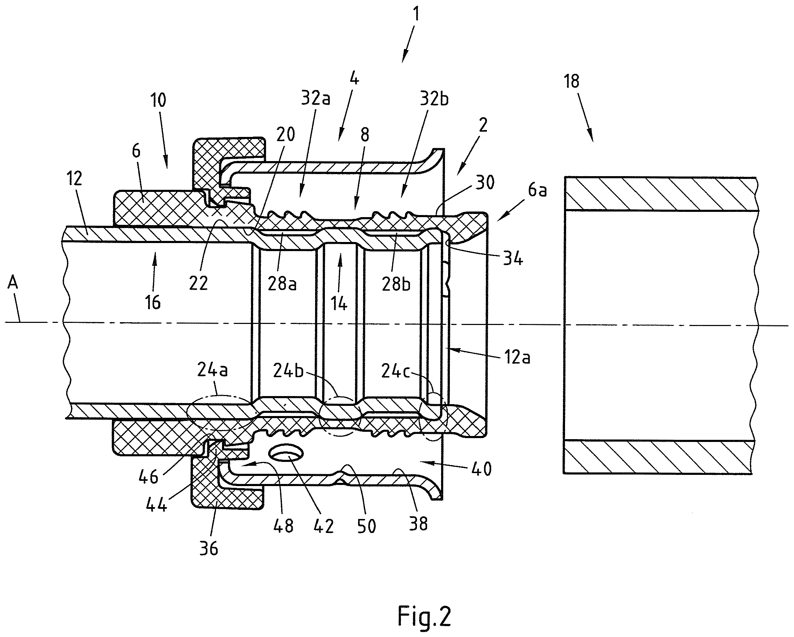

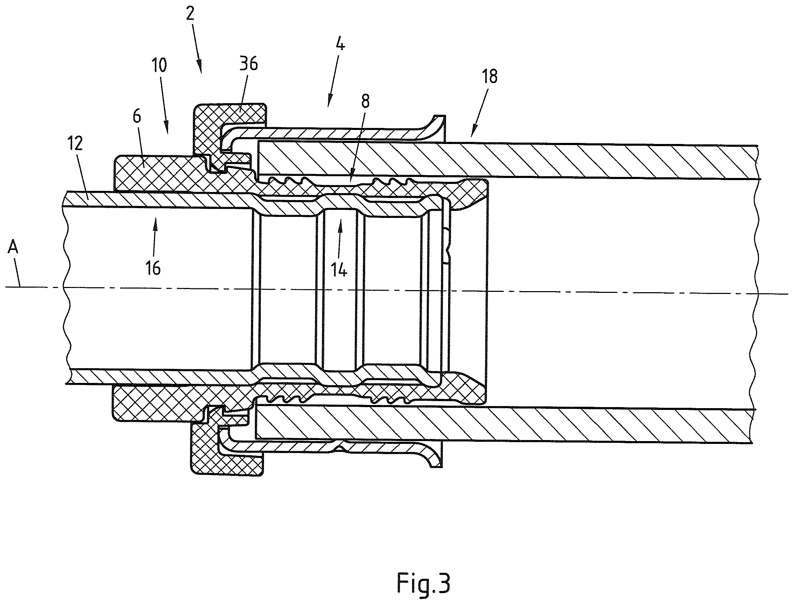

Fig. 2 zeigt ein zweites Ausführungsbeispiel eines erfindungsgemäßen Systems 1 mit einer Außenhülse 4 im Längsschnitt, während Fig. 3 das System mit auf den ersten Stützkörper aufgeschobenem rohrförmigen Ende zeigt.

Da das System 1 in Fig. 2 und Fig. 3 ähnlich zu dem aus Fig. 1 ist, werden sich entsprechende Teile des zweiten Ausführungsbeispiels des Systems 1 mit identischen Bezugszeichen versehen.

Im Unterschied zum im Fig. 1 dargestellten Fitting 2, weist das in Fig. 2 und Fig. 3 dargestellte Fitting 2 einen sich in axialer Richtung länger erstreckenden zweiten Stützabschnitt 14 auf. Dadurch überlappen sich der zweite Stützabschnitt 14 und der erste Stützabschnitt 8 in radialer Richtung auch noch im Bereich der weiteren radial auswärtige Erhöhung in Form der Zahnung 32b. Um trotz des zweiten Stützabschnitts 8 eine ähnliche Elastizität im Bereich der Zahnung 32b verglichen mit dem nach innen frei federnder Bereich an dem dem rohrförmigen Ende 18 zugewandten Ende 6a des ersten Stützabschnitts 8, wie er in Fig. 1 gezeigt ist, zu ermöglichen, ist wie im Bereich der Erhöhung 32a auch im Bereich der Erhöhung 32b ein Hohlraum 28b vorgesehen. Im Vergleich zu dem in Fig. 1 dargestellten Fitting, werden die Hohlräume 28a, 28b dadurch erzeugt, dass Aussparungen auf der Außenumfangsfläche 22 des zweiten Stützabschnitts 14 vorgesehen sind. Allerdings ragt auch in diesem Ausführungsbeispiel das dem rohrförmigen Ende 18 zugewandte Ende 6a des ersten Stützabschnitts 8 über das dem rohrförmigen Ende 18 zugewandte Ende 12a des zweiten Stützabschnitts 14 in axialer Richtung hinaus. Somit ergeben sich insgesamt 3 Bereiche 24a, 24b, 24c in denen der erste Stützabschnitt 8 gegenüber dem zweiten Stützabschnitt 14 mittels einer Presspassung abgedichtet ist. Zwischen den Bereichen 24a, 24b, 24c liegen die Hohlräume 28a, 28b. Es kann allerdings auch eine andere Anordnung dieser Bereich gewählt werden. Insbesondere kann eine andere Anzahl an Hohlräumen 28a, 28b und abdichtenden Bereichen 24a, 24b, 24c gewählt werden.

Ein weiterer Unterschied zwischen dem in Fig. 1 und dem in Fig. 2 und 3 gezeigten System besteht darin, dass der Flanschabschnitt 36 als vom Grundabschnitt 10 des ersten Fittingkörpers 6 separates Teil vorgesehen ist. Der Flanschabschnitt 36 besteht aus dem gleichen Material wie der erste Fittingkörper 6, wobei aber auch andere Materialien verwendet werden können. Der Flanschabschnitt 36 weist einen Rastvorsprung 44 auf, während der Grundabschnitt 10 eine entsprechende Rastvertiefung 46 auf der Außenumfangsfläche aufweist, um eine axiale Fixierung des Flanschabschnitts 36 gegenüber dem ersten Fittingkörper 6 zu erreichen. Der Flanschabschnitt 36 weist zudem eine Aussparung 48 zur Aufnahme des dem rohrförmigen Ende 18 abgewandten Endes der Außenhülse 4 auf.

Im Unterschied zu der in Fig. 1 dargestellten Außenhülse weist die in Fig. 2 und 3 gezeigt Außenhülse 4 außerdem einen Fixiervorsprung 50 zur Fixierung des rohrförmigen Endes 18 auf. Natürlich können auch mehrere solcher Vorsprünge vorgesehen sein.

Das in den Fig. 2 und 3 gezeigt Fitting ist sowohl für Gasals auch für Wasser- bzw. Trinkwasserleitungen verwendbar.

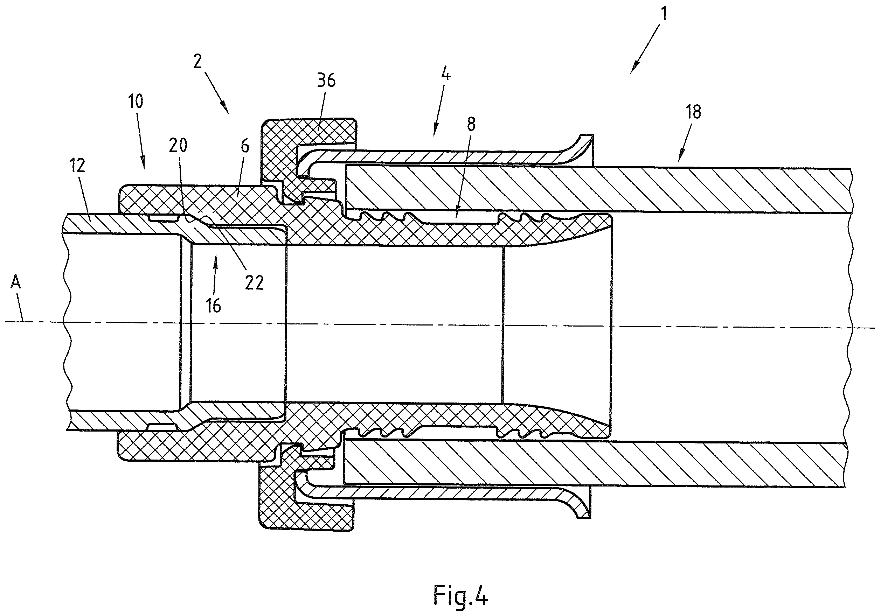

Fig. 4 zeigt ein drittes Ausführungsbeispiel eines erfindungsgemäßen Systems 1 mit einer Außenhülse im Längsschnitt. Auch hier werden den ersten Ausführungsbeispielen entsprechende Teile des dritten Ausführungsbeispiels des Systems 1 mit identischen Bezugszeichen versehen.

Der in dem in Fig. 4 gezeigten System 1 vorgesehene zweite Fittingkörper 12 weist einen geringeren Durchmesser als in den zuvor gezeigten Ausführungsbeispielen auf. Durch eine weitere Querschnittsreduktion kann sich ein erster Fittingkörper 6 mit einer Außenhülse 4 mit geringeren Durchmessern bzw. Querschnitten anschließen als in Fig. 1 bis 3. So kann ein rohrförmiges Ende mit geringerem Durchmesser angeschlossen werden.

Unabhängig von dem geringen Querschnitt, ist das System 1 aus Fig. 4 zwar ähnlich zu dem System 1 aus Fig. 1 bis 3 aufgebaut. Allerdings gibt es nur einen ersten Stützabschnitt 8, jedoch keinen zweiten Stützabschnitt. Eine Überlappung in radialer Richtung des ersten Stützabschnitts 8 mit einem zweiten Stützabschnitt ist nicht gegeben. Die Innenumfangsfläche 20 des ersten Fittingkörpers 6 und die Außenumfangsfläche 22 des zweiten Fittingkörpers 12 sind zumindest bereichsweise gegeneinander abgedichtet. Der innere Stützabschnitt 8 fungiert hier als Vollkunststoffstützabschnitt. Entsprechend ist die Wanddicke des ersten Stützabschnitts 8 größtenteils etwas dicker gewählt als die des in Fig. 2 gezeigten Stützabschnitts 8. Es hat sich herausgestellt, dass durch einen solchen Vollkunststoffstützabschnitt ein Metallrohr bzw. ein auf seiner Innenumfangsfläche Metall aufweisendes Verbundrohr abgedichtet werden kann. Die dichte Verbindung zwischen dem Grundabschnitt 16 und dem Grundabschnitt 10 des äußeren Fittingkörpers 6 wird wiederum durch eine Presspassung realisiert.

Das in Fig. 4 gezeigt System ist insbesondere zur Verwendung in Wasserleitungen, insbesondere Trinkwasserleitungen, vorgesehen.

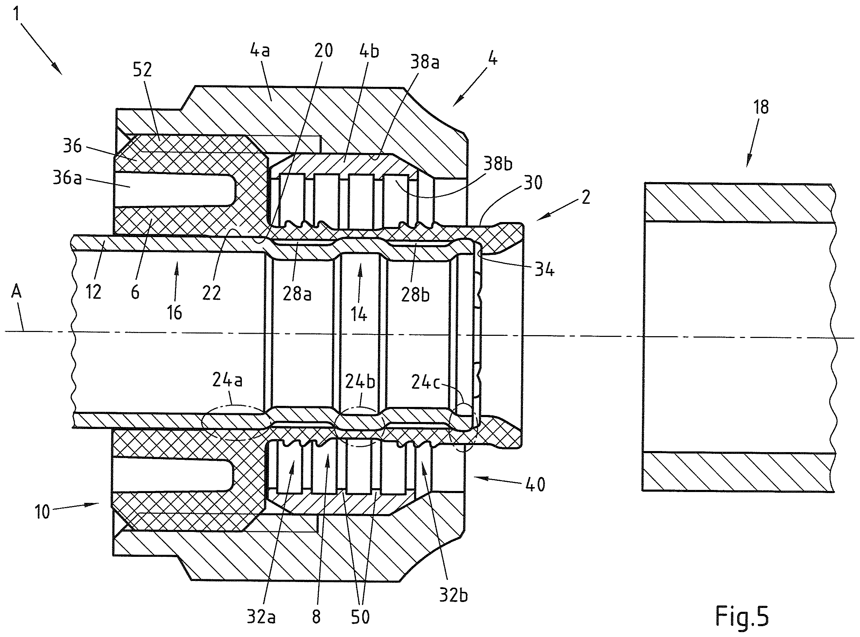

Fig. 5 zeigt ein viertes Ausführungsbeispiel eines erfindungsgemäßen Systems 1 mit einer eine Presshülse 4a und ein Kraftübertragungselement 4b aufweisenden Außenhülse 4 im Längsschnitt. Auch hier werden den ersten Ausführungsbeispielen entsprechende Teile des vierten Ausführungsbeispiels des Systems 1 mit identischen Bezugszeichen versehen. Das in Fig. 5 dargestellte Fitting 2 ist dem aus Fig. 2 ähnlich. Allerdings unterscheidet sich bei dem in Fig. 5 dargestellten Fitting 2 der Flanschabschnitt 36 des Grundabschnitts 10 des ersten Stützkörpers 6 von dem in Fig. 2 gezeigten. Der Flanschabschnitt 36 weist Mittel 52 zur Verbindung zur Außenhülse 4 auf, welche in diesem Ausführungsbeispiel zweiteilig ausgebildet ist und die als Überwurfmutter gestaltete Presshülse 4a und das als Klemmkörper gestaltete Kraftübertragungselement 4b umfasst. Die Überwurfmutter 4a und der Flanschabschnitt 36 werden hier mittels eines Gewindes 52 verbunden. Dabei ist das Gewinde 52 mit der Aussparung 36a im Flanschabschnitt 36 hinterschnitten. Wird die Überwurfmutter 4a auf das Gewinde 52 des Flanschabschnitts 36 aufgeschraubt, wird dadurch der Klemmkörper 4b aufgrund der schräg zur axialen Richtung A gestalteten Innenumfangsfläche 38a der Überwurfmutter 4a und der daran angepassten Außenumfangsfläche des Klemmkörpers 4b im Wesentlichen radial einwärtig gegen die Außenumfangsfläche eines des dann in die ringförmig umlaufende Aufnahme 40 eingeschobenen rohrförmigen Endes 18 gedrückt. Die Innenumfangsfläche des 38b des Klemmkörpers 4b weist dabei eine Profilierung durch die Fixiervorsprünge 50 auf.

Somit kann das in die Aufnahme 40 geschobenes rohrförmige Ende 18 nicht vom Fitting 2 herunterrutschen und gegen die Außenumfangsfläche 30 des ersten Stützkörpers 8 bzw. gegen vorgesehene radial auswärtige Erhöhungen 32a, 32b gedrückt werden, um eine besonders zuverlässige und dichte Verbindung herzustellen.

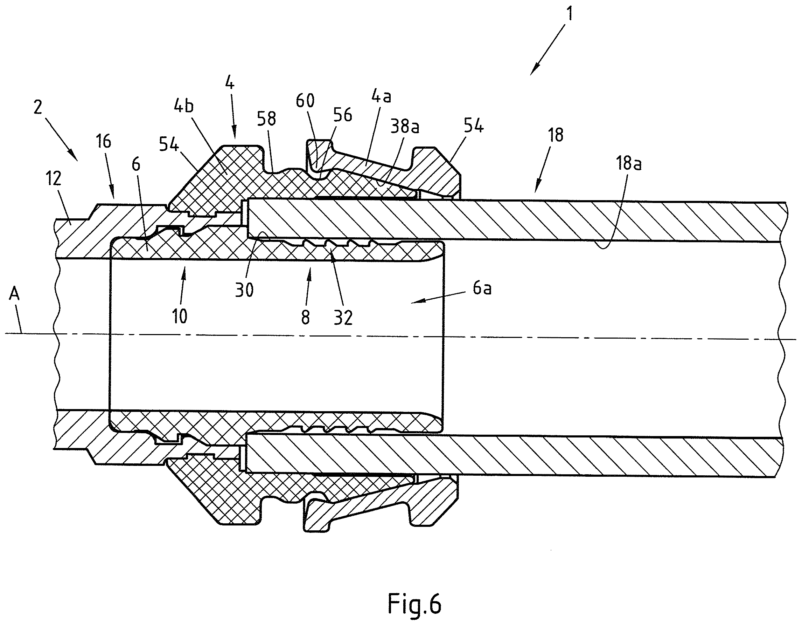

Fig. 6 zeigt ein fünftes Ausführungsbeispiel eines erfindungsgemäßen Systems 1 mit einer eine Presshülse 4a und ein Kraftübertragungselement 4b aufweisenden Außenhülse 4 im Längsschnitt. Auch hier werden den ersten Ausführungsbeispielen entsprechende Teile des fünften Ausführungsbeispiels des Systems 1 mit identischen Bezugszeichen versehen. System 1 zum Herstellen einer dichten Verbindung weist wie die vorherigen Ausführungsbeispiele ein rohrförmiges Ende 18 und ein Fitting 2 auf, wobei das Fitting 2 einen ersten rohrförmigen Fittingkörper 6 mit einem ersten Stützabschnitt 8 zum Einführen in das rohrförmige Ende 18 aufweist. Der Stützabschnitt besteht an seiner Außenumfangsfläche 30 hier vollständig Kunststoff, da der gesamte erste Fittingkörper 6 aus Kunststoff besteht. Das rohrförmige Ende 18 besteht an seiner Innenumfangsfläche 18a in diesem Fall vollständig aus Metall. Die aus Kunststoff bestehende Außenumfangsfläche 30 des ersten Stützabschnitts 8 und die aus Metall bestehende Innenumfangsfläche 18a des rohrförmigen Endes 18 sind wiederum zumindest abschnittsweise in dichte Anlage zueinander zu bringen. Insbesondere im Bereich der radial einwärtigen Erhöhung 32 auf der Außenumfangsfläche 30 des ersten Stützabschnitts 8 ist dies der Fall. In Fig. 6 ist jedoch der Zustand vor der Verpressung gezeigt.

Ähnlich wie in dem in Fig. 4 gezeigten System, weißt das in Fig. 6 gezeigte System einen aus Metall bestehenden zweiten Fittingkörper 12 aber keinen zweiten Stützabschnitt auf. Im Unterschied zu dem in Fig. 4 gezeigten System, ist der zweite Fittingkörper 12 zumindest teilweise außerhalb des ersten Fittingkörpers 6 angeordnet, wobei die Außenumfangsfläche des Grundabschnitts des ersten Fittingkörpers 6 und die Innenumfangsfläche des zweiten Fittingkörpers 12 zumindest bereichsweise gegeneinander abgedichtet sind. Dabei sind der erste Fittingkörper 6 und der zweite Fittingkörper 12 miteinander verrastet. Allerdings können auch andere formschlüssige, kraftschlüssige und/oder materialschlüssige Verbindungen vorgesehen sein.

Die Außenhülse 4 umfasst hier eine Presshülse 4a und ein Kraftübertragungselement 4b. Im Unterschied beispielsweise zu Fg. 5 ist hier das Kraftübertragungselement 4b mit seiner Innenumfangsfläche mit dem Grundabschnitt 16 des zweiten Fittingköropers 12 verrastet. Auch hier können andere formschlüssige, kraftschlüssige und/oder materialschlüssige Verbindungen vorgesehen sein. Aufgrund der schräg zur axialen Richtung A gestalteten Innenumfangsfläche 38a der Presshülse 4a und der daran angepassten Außenumfangsfläche des Kraftübertragungselements 4b wird durch ein axiales Aufschieben der Presshülse 4a auf das Kraftübertragungselement 4b das rohrförmige Ende 18 radial einwärtig verpresst und so die aus Metall bestehende Innenumfangsfläche 18a des rohrförmigen Endes 18 mit der aus Kunststoff bestehenden Außenumfangsfläche 30 des ersten Stützabschnitts 8 zumindest abschnittsweise in dichte Anlage gebracht. Aufgrund der gegeneinander gekippten Fasen 54 an der Presshülse 4a und dem Kraftübertragungselement 4b können diese mittels eines sich radiale einwärtig schließenden zangenartigen Presswerkzeugs (nicht dargestellt) axial aufeinander geschoben werden und so wiederum eine radial einwärtige Verpressung des rohrförmigen Endes 18 herbeiführen. Mittels der zwei auf der Außenumfangsfläche des Kraftübertragungselements 4b angeordneten Rastvertiefungen 56, 58 kann die Presshülse 4a durch Eingriff mit dem Rastvorsprung 60 in axialer Richtung arretiert werden. Dabei dient die Rastvertiefung 56 als temporäre Fixierung vor dem eigentlichen Verpressen, während die Rastvertiefung 58 zur endgültigen Fixierung der vollständig aufgeschobenen Presshülse 4a dient.

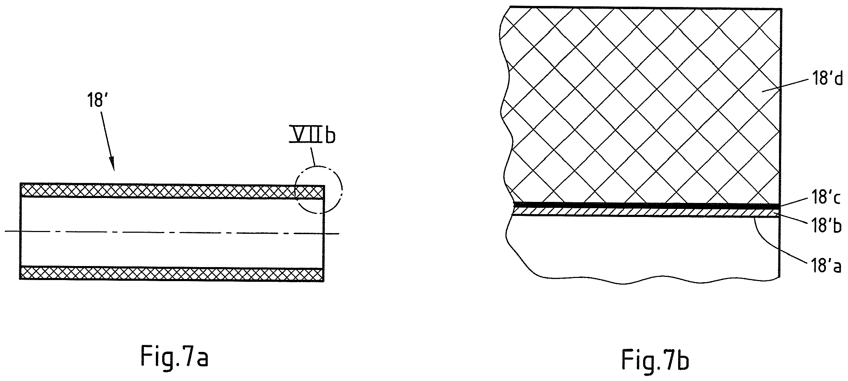

Fig. 7a zeigt eine Längsschnittansicht eines ein rohrförmiges Ende 18' aufweisenden Verbundrohres, welches anstelle des rohrförmige Endes 18 in den Fig. 1 bis 6 vorgesehen sein kann. Wie in der in Fig. 7b gezeigten vergrößerten Ansicht des Ausschnitts VIIB aus Fig. 7a zu erkennen ist, besteht das als Verbundrohr ausgestaltete Rohr im Wesentlichen aus einer Kunststoffschicht 18'd. Weiterhin weist das Rohr eine innere Schicht 18'b aus Metall auf, in diesem Fall einen Edelstahl-Inliner. Dadurch besteht die Innenumfangsfläche 18'a des rohrförmigen Endes 18' aus Metall. Die Metallschicht 18'b ist über eine Haftvermittlerschicht 18'c mit der Kunststoffschicht 18'd verbunden. Auf diese Weise weist das Kunststoffrohr gegenüber dem geführten Medium die vorteilhaften Eigenschaften, wie beispielsweise inerte Eigenschaften, eines Metallrohres auf. Es hat sich überraschenderweise gezeigt, dass trotz einer aus Metall bestehenden Innenumfangsfläche des rohrförmigen Endes eine Abdichtung mittels der in den Fig. 1 bis 6 gezeigten Fittings 2 möglich ist. Das Verbundrohr kann aber noch weitere Schichten aufweisen.

## Patentansprüche

1. System zum Herstellen einer dichten Verbindung
- mit einem rohrförmigen Ende (18,18') und
- mit einem Fitting (2),
- wobei das Fitting (2) zumindest einen ersten rohrförmigen Fittingkörper (6) mit einem ersten Stützabschnitt (8) zum Einführen in das rohrförmige Ende (18, 18') aufweist und
- wobei das rohrförmige Ende (18, 18') an seiner Innenumfangsfläche (18a) zumindest teilweise aus Metall besteht,
**dadurch gekennzeichnet,**
- **dass** der erste Stützabschnitt (8) ein einteiliger Abschnitt des Fittingkörpers (6) ist, welcher das rohrförmige Ende von innen stützen kann, und an seiner Außenumfangsfläche (30) zumindest teilweise aus Kunststoff besteht und
- **dass** die aus Kunststoff bestehende Außenumfangsfläche (30) des ersten Stützabschnitts (8) und die aus Metall bestehende Innenumfangsfläche (18a) des rohrförmigen Endes (18, 18') zumindest abschnittsweise in dichte Anlage zueinander zu bringen sind.

2. System nach Anspruch 1,
**dadurch gekennzeichnet,**
**dass** der erste Stützabschnitt (8), insbesondere der erste Fittingkörper (6), im Wesentlichen vollständig aus Kunststoff besteht.

3. System nach Anspruch 1 oder 2,
**dadurch gekennzeichnet,**
**dass** der Kunststoff des ersten Stützabschnitts (8), Polyphenylsulfon (PPSU), Polyvenylidenfluorid (PVDF), unvernetztem Polyethylen (PE-RT), vernetztem Polyethylen (PE-Xa, PE-Xb, PE-Xc), Polybuten und/oder Polypropylen ist.

4. System nach einem der Ansprüche 1 bis 3,
**dadurch gekennzeichnet,**
**dass** der Bereich zwischen der Außenumfangsfläche (30) des ersten Stützabschnitts (8) und der Innenumfangsfläche (18a) des rohrförmigen Endes (18, 18') dichtringfrei, insbesondere dichtelementfrei, ausgebildet ist

5. System nach einem der Ansprüche 1 bis 4,
**dadurch gekennzeichnet, dass** das rohrförmige Ende (18, 18') das Ende eines Metallrohres oder eines Verbundrohrs, insbesondere eines Mehrschichtverbundrohrs, ist.

6. System nach einem der Ansprüche 1 bis 5,
**dadurch gekennzeichnet,**
**dass** auf der Außenumfangsfläche (30) des ersten Stützabschnitts (6) mindestens eine radial auswärtige Erhöhung (32, 32a, 32b), insbesondere in Form einer Profilierung, vorgesehen ist.

7. System nach einem der Ansprüche 1 bis 6,
**dadurch gekennzeichnet,**
- **dass** das Fitting (2) einen zweiten zumindest teilweise aus Metall bestehenden rohrförmigen Fittingkörper (12) aufweist,
- wobei der zweite Fittingkörper (12) zumindest teilweise innerhalb des ersten Fittingkörpers (6) angeordnet ist,
- wobei die Innenumfangsfläche (20) des ersten Fittingkörpers (6) und die Außenumfangsfläche (22) des zweiten Fittingkörpers (12) zumindest bereichsweise gegeneinander abgedichtet sind.

8. System nach Anspruch 7,
**dadurch gekennzeichnet,**
- **dass** der zweite Fittingkörper (12) einen zumindest teilweise aus Metall bestehenden zweiten Stützabschnitt (14) zum Einführen in das rohrförmige Ende (18) aufweist,
- wobei der zweite Stützabschnitt (12) zumindest teilweise innerhalb des ersten Stützabschnitts (6) angeordnet ist,
- wobei die Innenumfangsfläche (20) des ersten Stützabschnitts (6) und die Außenumfangsfläche (22) des zweiten Stützabschnitts (12) bereichsweise (24a, 24b, 24c) gegeneinander abgedichtet sind und
- wobei zwischen der Innenumfangsfläche (20) des ersten Stützabschnitts (6) und der Außenumfangsfläche (22) des zweiten Stützabschnitts (12) mindestens ein Hohlraum (28a, 28b) gebildet ist.

9. System nach Anspruch 7 oder 8,
**dadurch gekennzeichnet,**
**dass** mindestens ein Hohlraum (28a, 28b) zwischen der Innenumfangsfläche (20) des ersten Stützabschnitts (6) und der Außenumfangsfläche (22) des zweiten Stützabschnitts (12) ein mit Luft gefüllter, vorzugsweise ringförmig umlaufender, Hohlraum (28a, 28b) ist.

10. System nach einem der Ansprüche 7 bis 9,
**dadurch gekennzeichnet,**
**dass** mindestens ein Hohlraum (28, 28b) zwischen der Innenumfangsfläche (20) des ersten Stützabschnitts (6) und der Außenumfangsfläche (22) des zweiten Stützabschnitts (12) durch mindestens eine Aussparung auf der Außenumfangsfläche (22) des zweiten Stützabschnitts (12) und/oder der Innenumfangsfläche (20) des ersten Stützabschnitts (6) gebildet ist.

11. System nach einem der Ansprüche 7 bis 10,
**dadurch gekennzeichnet,**
**dass** die Innenumfangsfläche (20) des ersten Stützabschnitts (6) und die Außenumfangsfläche (22) des zweiten Stützabschnitts (12) mittels einer kraftschlüssigen Verbindung, insbesondere einer Presspassung, bereichsweise gegeneinander abgedichtet sind.

12. System nach einem der Ansprüche 7 bis 11,
**dadurch gekennzeichnet,**
**dass** das dem rohrförmigen Ende (18, 18') zugewandte Ende (6a) des ersten Stützabschnitts (6) über das dem rohrförmigen Ende (18, 18') zugewandte Ende (12a) des zweiten Stützabschnitts (12) in axialer Richtung hinausragt.

13. System nach einem der Ansprüche 7 bis 12,
**dadurch gekennzeichnet,**
**dass** das dem rohrförmigen Ende (12) abgewandte Ende des zweiten Fittingkörpers (12) über das dem rohrförmigen Ende (18, 18') abgewandte Ende des ersten Fittingkörpers (6) in axialer Richtung hinausragt.

14. System nach einem der Ansprüche 1 bis 13,
- mit einer Außenhülse (4),
- wobei zwischen der Innenumfangsfläche (38) der Außenhülse (4) und der Außenumfangsfläche (30) des ersten Stützabschnitts (6) eine ringförmig umlaufende Aufnahme (40) für das zu verbindende rohrförmige Ende (18, 18') gebildet wird.

15. System nach Anspruch 14,
**dadurch gekennzeichnet, dass**
die Außenhülse (4) direkt oder indirekt mit dem ersten und/oder mit dem zweiten Fittingkörper (6, 12), insbesondere mit einem sich an den ersten Stützabschnitt (8) anschließenden Grundabschnitt (10) des ersten Fittingkörpers (6), verbunden ist.

16. Dichte Verbindung, hergestellt mit einem System (2) nach einem der Ansprüche 1 bis 15, wobei das rohrförmige Ende (18, 18') auf dem ersten Stützabschnitt (8) des ersten Fittingkörpers (6) positioniert ist.

## Claims

1. System for producing a fluid-tight connection
- with a tubular end (18, 18') and
- a fitting (2),
- wherein the fitting (2) has at least a first tubular fitting body (6) with a first support section (8) for insertion into the tubular end (18, 18') and
- wherein the tubular end (18,18') on the inner peripheral surface (18a) thereof is made at least partially of metal,
**characterised in that**
- the first support section (8) is a single-piece section of the fitting body (6), which can support the tubular end from the inside, and on the outer peripheral surface (30) thereof is made at least partially of plastic and
- **in that** outer peripheral surface (30) of the first support section (8) made of plastic and the inner peripheral surface (18a) of the tubular end (18, 18') made of metal are to be brought together in tight contact at least in sections.

2. System according to Claim 1,
**characterised in that**
the first support section (8), in particular the first fitting body (6), is substantially made entirely of plastic.

3. System according to Claim 1 or 2,
**characterised in that**
the plastic of the first support section (8) is polyphenolsulfone (PPSU), polyvinylidene fluoride (PVDF), uncured polyethylene (PE-RT), cured polyethylene (PE-Xa, PE-Xb, PE-Xc), polybutene and/or polypropylene.

4. System according to any one of Claims 1 to 3,
**characterised in that**
the region between the outer peripheral surface (30) of the first support section (8) and the inner peripheral surface (18a) of the tubular end (18, 18') is configured free of sealing rings, in particular free of sealing elements.

5. System according to any one of Claims 1 to 4,
**characterised in that**
the tubular end (18,18') is the end of a metal tube or a composite tube, in particular a multi-layer composite tube.

6. System according to any one of Claims 1 to 5,
**characterised in that**
at least one radially external enhancement (32, 32a, 32b), in particular in the form of profiling, is provided on the outer peripheral surface (30) of the first support section (6).

7. System according to any one of Claims 1 to 6,
**characterised in that**
- the fitting (2) has a second tubular fitting body (12) made at least partially of metal,
- wherein the second fitting body (12) is arranged at least partially inside the first fitting body (6),
- wherein the inner peripheral surface (20) of the first fitting body (6) and the outer peripheral surface (22) of the second fitting body (12) are sealed against each other at least in sections.

8. System according to Claim 7,
**characterised in that**
- the second fitting body (12) has a second support section (14) made at least partially of metal for insertion into the tubular end (18),
- wherein the second support section (12) is arranged at least partially inside the first support section (6),
- wherein the inner peripheral surface (20) of the first support section (6) and the outer peripheral surface (22) of the second support section (12) are sealed against each other in sections (24a, 24b, 24c) and
- wherein at least one cavity (28a, 28b) is formed between the inner peripheral surface (20) of the first support section (6) and the outer peripheral section (22) of the second support section (12).

9. System according to Claim 7 or 8,
**characterised in that**
at least one cavity (28a, 28b) between the inner peripheral surface (20) of the first support section (6) and the outer peripheral surface (22) of the second support section (12) is a preferably annular circumferential cavity (28, 28b) filled with air.

10. System according to any one of Claims 7 to 9,
**characterised in that**
at least one cavity (28, 28b) is formed between the inner peripheral surface (20) of the first support section (6) and the outer peripheral surface (22) of the second support section (12) by at least one recess on the outer peripheral surface (22) of the second support section (12) and/or the inner peripheral surface (20) of the first support section (6).

11. System according to any one of Claims 7 to 10,
**characterised in that**
the inner peripheral surface (20) of the first support section (6) and the outer peripheral surface (22) of the second support section (12) are sealed against each other in sections by means of a force-fit connection, in particular a press fit.

12. System according to any one of Claims 7 to 11,
**characterised in that**
the end (6a) of the first support section (6) facing the tubular end (18,18') protrudes beyond the end (12a) of the second support section (12) facing the tubular end (18, 18') in an axial direction.

13. System according to any one of Claims 7 to 12,
**characterised in that**
the end of the second fitting body (12) facing away from the tubular end (12) protrudes beyond the end of the first fitting body (6) facing away from the tubular end (18, 18') in an axial direction.

14. System according to any one of Claims 1 to 13,
- with an outer sleeve (4),
- wherein an annular circumferential retainer (40) is formed for the tubular end (18, 18') to be connected between the inner peripheral surface (38) of the outer sleeve (4) and the outer peripheral surface (30) of the first support section (6).

15. System according to Claim 14,
**characterised in that**
the outer sleeve (4) is directly or indirectly connected to the first and/or the second fitting body (6, 12), in particular to a base section (10) of the first fitting body (6) adjacent to the first support section (8).

16. Fluid-tight connection, produced using a system (2) according to any one of Claims 1 to 15, wherein the tubular end (18,18') is positioned on the first support section (8) of the first fitting body (6).

## Revendications

1. Système de fabrication d'une liaison étanche,
- avec une extrémité en forme de tube (8, 18') et
- avec un raccord (2),
- sachant que le raccord (2) présente au moins un premier corps de raccordement (6) avec une première section de support (8), destinée à être introduite dans l'extrémité en forme de tube (18, 18') et
- sachant que la face périphérique, intérieure (18a, 18b) de l'extrémité en forme de tube (18, 18') consiste, au moins partiellement, en métal,
**caractérisé en ce que**
- la première section de support (8) est une section monobloc du premier corps de raccordement (6), qui peut soutenir l'extrémité en forme de tube (18, 18') à partir de l'intérieur et dont la face périphérique extérieure (30) consiste au moins partiellement en matière synthétique, et
- la face périphérique extérieure (30) de la première section de support (8), consistant en matière synthétique, et la face périphérique, intérieure (18a) de l'extrémité en forme de tube (18, 18'), consistant en métal, peuvent être appliquées, au moins partiellement, l'une contre l'autre de manière étanche.

2. Système selon la revendication 1, **caractérisé en ce que** la première section de support (8), en particulier le premier corps de raccordement (6) consistent, essentiellement, complètement en matière synthétique.

3. Système selon revendication 1 ou 2, **caractérisé en ce que** la matière synthétique de la première section de support (8) est du polysulfone de phénylène (PPSU), du fluorure de polyvinylidène (PVDF), du polyéthylène non réticulé (PE-RT), du polyéthylène réticulé PE-Xa, PE-Xb, PE X-c, du polybutène et / ou du polypropylène.

4. Système selon l'une des revendications 1 à 3, **caractérisé en ce que** la zone entre la face périphérique, extérieure (30) de la première section de support (8) et la face périphérique, intérieure (18a) de l'extrémité en forme de tube (18, 18') sont de conception exempte de bague d'étanchéité, en particulier exempte d'élément d'étanchéité.

5. Système selon l'une des revendications 1 à 4, **caractérisé en ce que** l'extrémité en forme de tube (18, 18') est l'extrémité d'un tube métallique, d'un tube composite, en particulier d'un tube composite multicouches.

6. Système selon l'une des revendications 1 à 5, **caractérisé en ce que,** sur la face périphérique, extérieure (30) de la première section de support (6) est prévue au moins une élévation radiale (32, 32a, 32b), en particulier en forme de profilé.

7. Système selon l'une des revendications 1 à 6, **caractérisé en ce que**
- le raccord (2) présente au moins un deuxième corps de raccordement (12) en forme de tube, qui consiste, au moins partiellement, en métal,
- sachant que le deuxième corps de raccordement (12) est disposé, au moins partiellement, à l'intérieur du premier corps de raccordement (6),
- sachant que la face périphérique, intérieure (20) du premier corps de raccordement (6) et la face périphérique, extérieure (22) du deuxième corps de raccordement (12) sont étanchéifiées, au moins par sections, l'une par rapport à l'autre.

8. Système selon la revendication 7, **caractérisé en ce que**
- le deuxième corps de raccordement (12) est doté d'une deuxième section de support (14) consistant au moins partiellement en métal, qui est destinée à être introduite dans l'extrémité en forme de tube (18),
- sachant que la deuxième section de support (12) est disposée au moins partiellement à l'intérieur de la première section de support (6),
- sachant que la face périphérique, intérieure (20) de la première section de support (6) et la face périphérique, extérieure (22) de la deuxième section de support (12) sont étanchéifiées par sections (24a, 24b, 24c) l'une par rapport à l'autre,
- sachant qu'au moins un espace creux (28a, 28b) est formé entre la face périphérique, intérieure (20) de la première section de support (6) et la face périphérique, extérieure (22) de la deuxième section de support (12)

9. Système selon revendication 7 ou 8, **caractérisé en ce que** l'au moins un espace creux (28a, 28b) entre la face périphérique, intérieure (20) de la première section de support (6) et la face périphérique, extérieure (22) de la deuxième section de support (12) est un espace creux (28a, 28b), de préférence de forme annulaire, qui est rempli d'air.

10. Système selon l'une des revendications 7 à 9, **caractérisé en ce que** l'au moins un espace creux (28a, 28b) entre la face périphérique, intérieure (20) de la première section de support (6) et la face périphérique, extérieure (22) de la deuxième section de support (12) est formé par au moins un évidement pratiqué sur la face périphérique, intérieure (20) de la première section de support (6) et / ou sur la face périphérique, extérieure (22) de la deuxième section de support (12).

11. Système selon l'une des revendications 7 à 10, **caractérisé en ce que** la face périphérique, intérieure (20) de la première section de support (6) et la face périphérique, extérieure (22) de la deuxième section de support (12) sont étanchéifiées par sections l'une par rapport à l'autre au moyen d'une liaison par adhérence, en particulier par ajustement serré.

12. Système selon l'une des revendications 7 à 11, **caractérisé en ce que** l'extrémité (6a) de la première section de support (6), orientée vers l'extrémité en forme de tube (18, 18'), fait saillie, dans la direction axiale, au-dessus de l'extrémité (12a) de la deuxième section de support (12).

13. Système selon l'une des revendications 7 à 12, **caractérisé en ce que** l'extrémité du deuxième corps de raccordement (12), opposée à l'extrémité en forme de tube (12), fait saillie, dans la direction axiale, au-dessus de l'extrémité du premier corps de raccordement (6) opposée à l'extrémité en forme de tube (18, 18').

14. Système selon l'une des revendications 1 à 13,
- avec une douille extérieure (4),
- sachant qu'un réceptacle annulaire, continu (40) est formé entre la face périphérique, intérieure (38) de la douille extérieure (4) et la face périphérique, extérieure (30) de la première section de support (6) pour la réception de l'extrémité en forme de tube (18, 18') devant être reliée.

15. Système selon la revendication 14, **caractérisé en ce que** la douille extérieure (4) est reliée directement ou indirectement au premier et / ou au deuxième corps de raccordement (6, 12), en particulier à une section de base (10) du premier corps de raccordement (6) faisant suite à la première section de support (8).

16. Liaison étanche réalisée avec un système (2) selon l'une des revendications 1 à 15, sachant que l'extrémité en forme de tube (18, 18') est positionnée sur la première section de support (8) du premier corps de raccordement (6).
